# EUROPEAN PATENT APPLICATION

(11) **EP 4 826 514 A1**
(43) Date of publication of application: **21.10.2026**
(21) Application number: 24917359.2
(22) Date of filing: 12.01.2024
(51) Int. Cl.: G06F 3/14, G06F 13/42, G06F 3/041

(54) **SINK DEVICE AND METHOD FOR OPERATING SAME**

(30) Priority: 11.01.2024 KR 20240004583
(71) Applicant: LG Electronics Inc., Yeongdeungpo-gu Seoul 07336 (KR)
(72) Inventor: LEE, Dong Hee, Seoul 06772 (KR); PARK, Tae Jin, Seoul 06772 (KR)
(74) Representative: Vossius & Partner Patentanwälte Rechtsanwälte mbB
(86) International application number: PCT/KR2024/000643
(87) International publication number: WO 2025/150595

(57) **Abstract**

A sink device according to an embodiment of the present disclosure may include a display configured to receive a touch input, an external device interface configured to receive a video signal from a source device through a Universal Serial Bus (USB) standard, and a controller configured to detect connection to the source device through the USB standard and switch a processing entity of the touch input received through the display from the sink device to the source device when the display outputs the video signal.

## Description

### [Technical Field]

The present disclosure relates to a sink device.

### [Background Art]

Similar to touch support in a USB-C DP Alt (DisplayPort Alternate) mode of commercially available products, a USB-C input of a stand-type display apparatus is intended to support the same.

However, unlike commercially available products, the stand-type display apparatus is a product equipped with its own OS (Operating System), and the touch input is processed by the OS itself without transmitting the touch to an external device.

When a USB-C DP Alt mode is equipped, an external device should be controllable through touch, and thus a problem arises in that a conflict occurs with the use of the OS.

This is basically caused by a product characteristic in which the stand-type display apparatus is a sink device while also being a source device itself.

### [Invention]

### [Technical Problem]

An object of the present disclosure is to prevent a conflict in processing a touch input when the touch input is applied to a sink device in a USB connection state between a source device and the sink device.

Another object of the present disclosure is to freely switch a processing entity for a touch input applied to a sink device in a USB connection state between a source device and the sink device.

### [Technical Solution]

A sink device according to an embodiment of the present disclosure may include a display configured to receive a touch input, an external device interface configured to receive a video signal from a source device through a Universal Serial Bus (USB) standard, and a controller configured to detect connection to the source device through the USB standard and switch a processing entity of the touch input received through the display from the sink device to the source device when the display outputs the video signal.

A method of operating a sink device including a display configured to receive a touch input and an external device interface configured to receive a video signal from a source device through a Universal Serial Bus (USB) standard according to an embodiment of the present disclosure may include detecting connection to the source device through the USB standard, receiving the video signal, and switching a processing entity of the touch input received through the display from the sink device to the source device when the display outputs the video signal.

### [Effect of the Invention]

According to an embodiment of the present disclosure, when a touch input is applied to a sink device in a USB connection state between a source device and the sink device, a conflict in processing the touch input can be prevented. Accordingly, occurrence of an error in an operation according to the touch input can be prevented in advance.

### [Description of Drawings]

FIG. 1 is a block diagram illustrating a configuration of a display apparatus according to an embodiment of the present disclosure.
FIG. 2 is a diagram for describing a configuration of a display system according to an embodiment of the present disclosure.
FIG. 3 is a flowchart for describing a method of operating a sink device according to an embodiment of the present disclosure.
FIG. 4 is a flowchart for describing a process of determining a processing entity of a touch input according to detection of a specific action when a source device is determined as the processing entity of the touch input according to an embodiment of the present disclosure.
FIG. 5 is a flowchart for describing a process of determining a processing entity of a touch input according to detection of a specific action when a source device is determined as the processing entity of the touch input according to another embodiment of the present disclosure.
FIG. 6A and FIG. 6B are views for describing a landscape mode and a portrait mode of a stand-type display apparatus according to an embodiment of the present disclosure.

### [Best Mode]

Hereinafter, embodiments related to the present disclosure will be described in more detail with reference to the drawings. Suffixes "module" and "unit" for components used in the following description are assigned or used interchangeably only in consideration of convenience in drafting the specification, and do not themselves have meanings or roles distinguished from each other.

A display apparatus according to an embodiment of the present disclosure is, for example, an intelligent display apparatus in which a computer support function is added to a broadcast receiving function, and while being faithful to the broadcast receiving function, may further include an Internet function and the like, thereby having an interface that is more convenient for use, such as a handwriting-type input device, a touch screen, or a spatial remote controller. In addition, by supporting a wired or wireless Internet function, the display apparatus may be connected to the Internet and a computer, and may perform functions such as e-mail, web browsing, banking, or gaming. A standardized general-purpose OS may be used for such various functions.

Accordingly, in the display apparatus described in the present disclosure, for example, various applications may be freely added to or deleted from a general-purpose OS kernel, and thus various user-friendly functions may be performed. More specifically, the display apparatus may be, for example, a network TV, an HBBTV, a smart TV, an LED TV, an OLED TV, or the like, and may also be applied to a smartphone in some cases.

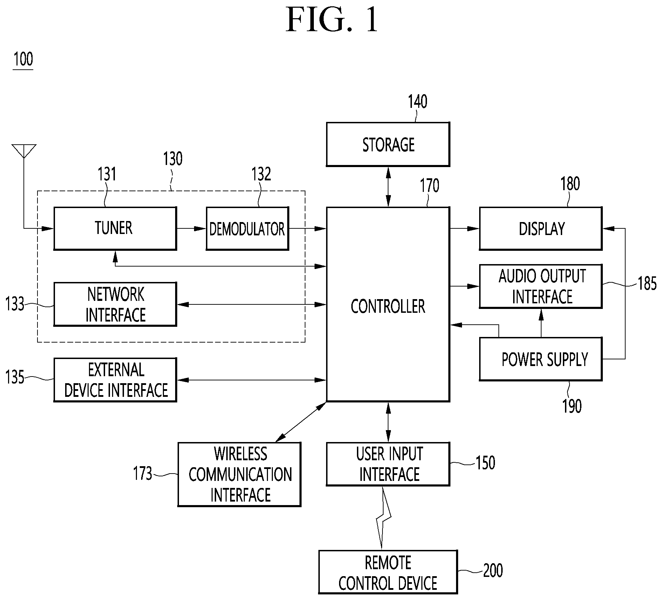

FIG. 1 is a block diagram illustrating a configuration of a display apparatus according to an embodiment of the present disclosure.

Referring to FIG. 1, the display apparatus 100 may include a broadcast receiving module 130, an external device interface 135, a memory 140, a user input interface 150, a controller 170, a wireless communication interface 173, a display 180, a speaker 185, and a power supply circuit 190.

The broadcast receiving module 130 may include a tuner 131, a demodulator 132, and a network interface 133.

The tuner 131 may tune to a specific broadcast channel according to a channel tuning command. The tuner 131 may receive a broadcast signal for the tuned specific broadcast channel.

The demodulator 132 may separate a received broadcast signal into a video signal, an audio signal, and a data signal related to a broadcast program, and may restore the separated video signal, audio signal, and data signal into a form capable of being output.

The external device interface 135 may receive an application or an application list in an adjacent external device and may transmit the application or application list to the controller 170 or the memory 140.

The external device interface 135 may provide a connection path between the display apparatus 100 and an external device. The external device interface 135 may receive one or more of video and audio output from an external device connected to the display apparatus 100 wirelessly or through a wire and may transmit the received one or more of video and audio to the controller 170. The external device interface 135 may include a plurality of external input terminals. The plurality of external input terminals may include an RGB terminal, one or more HDMI (High Definition Multimedia Interface) terminals, and a Component terminal.

A video signal of an external device input through the external device interface 135 may be output through the display 180. An audio signal of an external device input through the external device interface 135 may be output through the speaker 185.

An external device connectable to the external device interface 135 may be any one of a set-top box, a Blu-ray player, a DVD player, a game console, a sound bar, a smartphone, a PC, a USB memory device, and a home theater, but this is merely an example.

The network interface 133 may provide an interface for connecting the display apparatus 100 to a wired or wireless network including the Internet. The network interface 133 may transmit or receive data to or from another user or another electronic device through a connected network or another network linked to the connected network.

In addition, the network interface 133 may transmit a portion of content data stored in the display apparatus 100 to a selected user or a selected electronic device among other users or other electronic devices registered in advance in the display apparatus 100.

The network interface 133 may access a predetermined web page through a connected network or another network linked to the connected network. That is, the network interface 133 may access the predetermined web page through the network and may transmit or receive data to or from a corresponding server.

In addition, the network interface 133 may receive content or data provided by a content provider or a network operator. That is, the network interface 133 may receive, through the network, content such as movies, advertisements, games, VOD, and broadcast signals provided by a content provider or a network provider, and information related thereto.

In addition, the network interface 133 may receive firmware update information and update files provided by a network operator and may transmit data to the Internet or to a content provider or a network operator.

The network interface 133 may select and receive a desired application among applications publicly disclosed (open) through a network.

The memory 140 may store programs for signal processing and control in the controller 170 and may store processed video, audio, or data signals.

In addition, the memory 140 may perform a function for temporarily storing video, audio, or data signals input through the external device interface 135 or the network interface 133 and may store information regarding a predetermined image through a channel memory function.

The memory 140 may store an application or an application list input through the external device interface 135 or the network interface 133.

The display apparatus 100 may reproduce a content file stored in the memory 140, such as a moving image file, a still image file, a music file, a document file, or an application file, and may provide the reproduced content file to a user.

The user input interface 150 may transmit a signal input by a user to the controller 170 or may transmit a signal from the controller 170 to the user. For example, the user input interface 150 may receive and process control signals such as power on/off, channel selection, and screen setting from a remote control apparatus 200 or may process transmission of a control signal from the controller 170 to the remote control apparatus 200 according to various communication methods such as Bluetooth, UWB (Ultra Wideband), ZigBee, RF (Radio Frequency) communication, or IR (Infrared) communication.

In addition, the user input interface 150 may transmit a control signal input through a local key (not shown), such as a power key, a channel key, a volume key, or a setting value, to the controller 170.

A video signal processed by the controller 170 may be input to the display 180 and may be displayed as an image corresponding to the video signal. In addition, the video signal processed by the controller 170 may be input to an external output device through the external device interface 135.

An audio signal processed by the controller 170 may be output as audio through the speaker 185. In addition, the audio signal processed by the controller 170 may be input to an external output device through the external device interface 135.

In addition, the controller 170 may control overall operations within the display apparatus 100.

In addition, the controller 170 may control the display apparatus 100 according to a user command input through the user input interface 150 or according to an internal program and may allow a user to download a desired application or application list into the display apparatus 100 by accessing a network.

The controller 170 may allow channel information selected by a user and the like to be output through the display 180 or the speaker 185 together with a processed video signal or audio signal.

In addition, according to an external device video playback command received through the user input interface 150, the controller 170 may allow a video signal or an audio signal from an external device input through the external device interface 135, for example, from a camera or a camcorder, to be output through the display 180 or the speaker 185.

Meanwhile, the controller 170 may control the display 180 to display an image and, for example, may control a broadcast image input through the tuner 131, an external input image input through the external device interface 135, an image input through the network interface, or an image stored in the memory 140 to be displayed on the display 180. In this case, the image displayed on the display 180 may be a still image or a moving image and may be a 2D image or a 3D image.

In addition, the controller 170 may control content stored in the display apparatus 100, received broadcast content, or external input content input from outside to be reproduced, and the content may be in various forms including a broadcast image, an external input image, an audio file, a still image, a connected web screen, and a document file.

The wireless communication interface 173 may perform communication with an external device through wired or wireless communication. The wireless communication interface 173 may perform short-range communication with an external device. For this purpose, the wireless communication interface 173 may support short-range communication using at least one of Bluetooth^{™}, RFID (Radio Frequency Identification), Infrared Data Association (IrDA), UWB (Ultra Wideband), ZigBee, NFC (Near Field Communication), Wi-Fi (Wireless-Fidelity), Wi-Fi Direct, and Wireless USB (Wireless Universal Serial Bus) technologies. The wireless communication interface 173 may support wireless communication between the display apparatus 100 and a wireless communication system, between the display apparatus 100 and another display apparatus 100, or between the display apparatus 100 and a network in which the display apparatus 100 or an external server is located, through Wireless Area Networks. The Wireless Area Networks may be Wireless Personal Area Networks.

Here, the other display apparatus 100 may be a wearable device capable of exchanging data with the display apparatus 100 according to the present disclosure (or capable of interworking therewith), for example, a smartwatch, a smart glass, or an HMD (head mounted display), or may be a mobile terminal such as a smartphone. The wireless communication interface 173 may detect (or recognize) a communicable wearable device around the display apparatus 100.

Furthermore, when the detected wearable device is a device authenticated to communicate with the display apparatus 100 according to the present disclosure, the controller 170 may transmit at least a portion of data processed in the display apparatus 100 to the wearable device through the wireless communication interface 173. Accordingly, a user of the wearable device may use the data processed in the display apparatus 100 through the wearable device.

The display 180 may generate a driving signal by converting a video signal, a data signal, an OSD signal processed by the controller 170, or a video signal and a data signal received through the external device interface 135 into R, G, and B signals, respectively.

Meanwhile, since the display apparatus 100 illustrated in FIG. 1 is merely one embodiment of the present disclosure, some of the illustrated components may be integrated, added, or omitted according to specifications of an actually implemented display apparatus 100.

That is, as necessary, two or more components may be combined into one component, or one component may be divided into two or more components. In addition, functions performed in each block are for describing embodiments of the present disclosure, and specific operations or devices thereof do not limit the scope of the present disclosure.

According to another embodiment of the present disclosure, unlike that illustrated in FIG. 1, the display apparatus 100 may receive and reproduce an image through the network interface 133 or the external device interface 135 without including the tuner 131 and the demodulator 132.

For example, the display apparatus 100 may be implemented separately as an image processing apparatus such as a set-top box for receiving a broadcast signal or content according to various network services, and a content reproducing apparatus for reproducing content input from the image processing apparatus.

In this case, the method of operating the display apparatus according to embodiments of the present disclosure described below may be performed not only by the display apparatus 100 described with reference to FIG. 1 but also by either the separated image processing apparatus such as the set-top box or the content reproducing apparatus including the display 180 and the speaker 185.

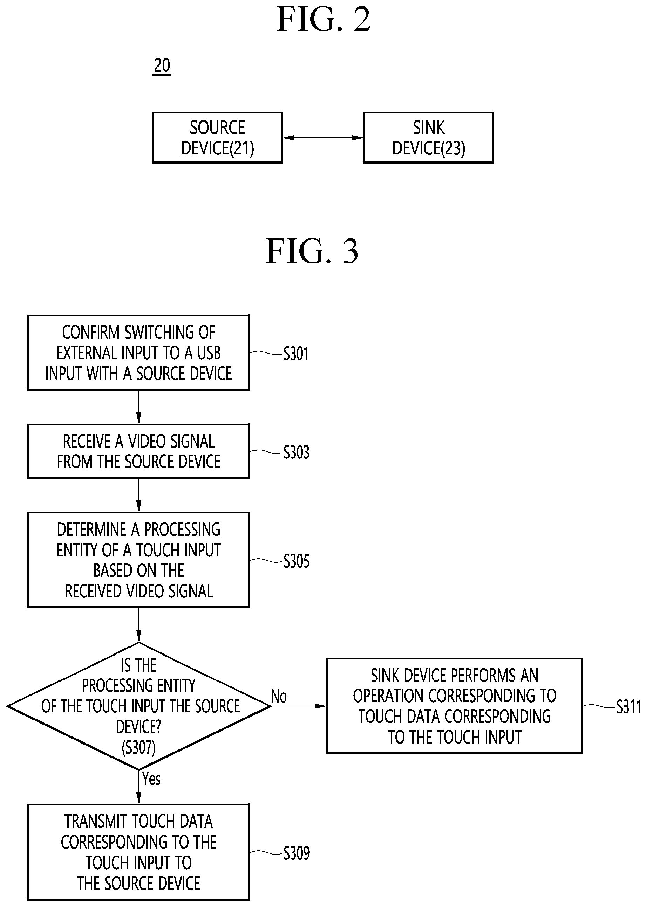

FIG. 2 is a diagram for describing a configuration of a display system according to an embodiment of the present disclosure.

Referring to FIG. 2, the display system 20 may include a source device 21 and a sink device 23.

The source device 21 and the sink device 23 may be connected to each other through a Universal Serial Bus (USB) standard.

In particular, the source device 21 and the sink device 23 may be connected through USB B-Type, USB C-Type, or USB-C DP Alt (USB-C DisplayPort Alternate).

The source device 21 may transmit one or more of a video signal and an audio signal to the sink device 23.

The sink device 23 may output one or more of the video signal and the audio signal received from the source device 21.

The sink device 23 may be the display apparatus 100 illustrated in FIG. 1.

The source device 21 may be any one of a smartphone, a notebook computer, a PC, and a smart pad. The source device 21 may also be the display apparatus 100 of FIG. 1.

FIG. 3 is a flowchart for describing a method of operating a sink device according to an embodiment of the present disclosure.

In FIG. 3, the sink device 23 may include all components of the display apparatus 100 of FIG. 1.

Hereinafter, processing a touch input may indicate performing an operation corresponding to the touch input.

Referring to FIG. 3, the controller 170 of the sink device 23 may identify that an external input is switched to a USB (Universal Serial Bus) input with the source device 21 (S301).

As an example, when the source device 21 is connected to a USB terminal provided in the external device interface 135, the controller 170 may determine that the external input has been switched to a USB input.

As another example, when the source device 21 is connected to a USB terminal provided in the external device interface 135 and a USB input item is selected through an external input menu, the controller 170 may determine that the external input has been switched to a USB input.

In an embodiment, the USB input may be a USB-C DP Alt (USB-C DisplayPort Alternate) input. USB-C DP Alt (USB-C DisplayPort Alternate) may indicate a standard (or mode) for transmitting a video signal through a USB-C connection port.

Another USB input may indicate an input through a general USB-C type or an input through a USB-B type.

The controller 170 of the sink device 23 receives a video signal from the source device 21 (S303).

The controller 170 may receive the video signal from the source device 21 connected through the USB standard to the external device interface 135.

The video signal may be a signal currently output by the source device 21. Specifically, the video signal may be a signal corresponding to a video displayed on a display of the source device 21.

The controller 170 of the sink device 23 may determine a processing entity of a touch input based on the received video signal (S305).

The controller 170 may determine the processing entity of the touch input received on the display 180 having a touch panel function based on the video signal received from the source device 21.

The processing entity of the touch input may be either the source device 21 or the sink device 23. Before the external input is switched to the USB input, the processing entity of the touch input may be the sink device 23.

The controller 170 may monitor the video signal received from the source device 21 and may determine, based on a monitoring result, whether to switch the processing entity of the touch input from the sink device 23 to the source device 21.

In an embodiment, when the display 180 outputs the video signal received from the source device 21, the controller 170 may switch the processing entity of the touch input from the sink device 23 to the source device 21. The controller 170 may switch the processing entity of the touch input from the sink device 23 to the source device 21 from a point in time at which the display 180 outputs the video signal received from the source device 21.

When the processing entity of the touch input is switched to the source device 21, the controller 170 may bypass touch data corresponding to the touch input, or the touch data, to the source device 21.

Thereafter, when the USB input from the source device 21 is maintained and the video signal is normally output, the controller 170 may maintain the processing entity of the touch input as the source device 21. A case in which the USB input is maintained may be a case in which the connection of the source device 21 to a USB port of the external device interface 135 of the sink device 23 is maintained.

Thereafter, when the USB input is not maintained or the video signal is not normally output, the controller 170 may switch the processing entity of the touch input back from the source device 21 to the sink device 23.

A case in which the video signal is not normally output may be a case in which the source device 21 is connected to the sink device 23 through a USB cable but power of the source device 21 is turned off. When power of the source device 21 is turned off, the video signal may not be transmitted to the sink device 23. Accordingly, the sink device 23 cannot normally output the video signal.

As another example, when the controller 170 detects connection to the source device 21 through the USB standard, the controller 170 may switch the processing entity of the touch input from the sink device 23 to the source device 21.

When the controller 170 detects connection to the source device 21 through the USB standard and the video signal is output on the display 180, the controller 170 may switch the processing entity of the touch input from the sink device 23 to the source device 21. That is, since a condition that the video signal is normally output is additionally applied, an unintended switch of the processing entity of the touch input can be prevented.

When the controller 170 of the sink device 23 determines that the processing entity of the touch input is the source device 21 (S307), the controller 170 may transmit touch data corresponding to the touch input to the source device 21 (S309).

When the processing entity of the touch input is switched to the source device 21, the controller 170 may bypass touch data corresponding to the touch input, or the touch data, to the source device 21.

When the processing entity of the touch input is the source device 21, the controller 170 may transmit, to the source device 21, touch data for causing a control command corresponding to the touch input received on the display 180 to be performed.

The touch data may include data related to the touch, such as coordinates of the touch input received on a screen of the display 180 and a touch type of the touch input. The touch type may be either a touch-down type or a touch-up type.

The source device 21 may receive the touch data from the sink device 23 through the external device interface 135. The source device 21 may perform an operation corresponding to the touch data at a position matching coordinate of the touch input based on the received touch data.

Meanwhile, in a state in which the processing entity of the touch input received on the display 180 is determined as the source device 21, when a USB connection of the source device 21 is released, output of the video signal is abnormal, or an external input is switched from a USB input to another input by a remote control apparatus for controlling the sink device 23, the processing entity may be switched back to the sink device 23.

A case in which the video output is abnormal may be a case in which power of the source device 21 is turned off.

When the controller 170 of the sink device 23 determines that the processing entity of the touch input is the sink device 23 (S307), the controller 170 may perform an operation corresponding to touch data corresponding to the touch input (S311).

When the controller 170 determines that the processing entity of the touch input is the sink device 23, the controller 170 may block transmission of touch data corresponding to the touch input to the source device 21.

The operation corresponding to the touch data may be any one of selection of a UI element on the display 180, playback control of a displayed video, and execution of an application, but is merely an example.

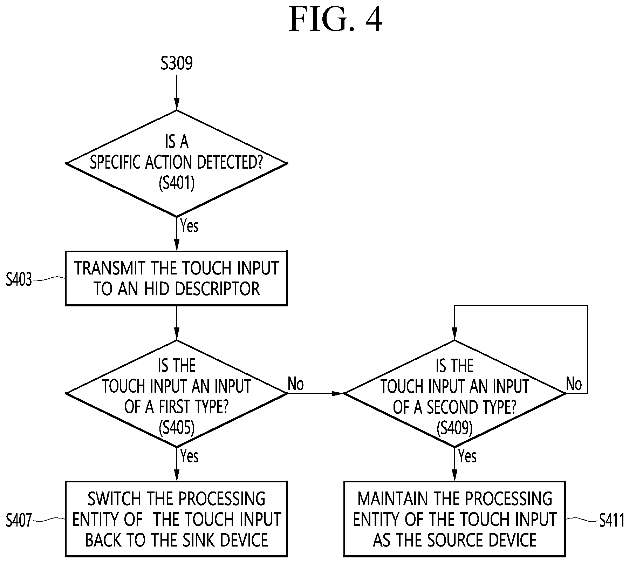

FIG. 4 is a flowchart for describing a process of determining a processing entity of a touch input according to detection of a specific action when a source device is determined as the processing entity of the touch input according to an embodiment of the present disclosure.

FIG. 4 may illustrate an operation performed after step S309 of FIG. 3.

Referring to FIG. 4, in a state in which the processing entity of the touch input is determined as the source device 21, the controller 170 of the sink device 23 may determine whether a specific action is detected (S401).

The specific action may be a user action of selecting a toggle button displayed on the display 180 of the sink device 23. As an example, the controller 170 may receive a control signal for the toggle button from a remote control apparatus (not shown).

As another example, the specific action may be a user's voice command indicating an intention to switch the processing entity of the touch input.

As another example, when the sink device 23 includes a camera, the specific action may be a specific gesture extracted from a user image captured through the camera.

When the controller 170 determines that the specific action is detected, the controller 170 may transmit a touch input received thereafter to an HID (Human Interface Device) descriptor (S403).

The HID descriptor may be a descriptor that determines a type of the touch input and a function of the touch input.

The HID descriptor may be hardware configured separately from the controller 170. The HID descriptor may be software mounted in an operating system of the sink device 23.

The HID descriptor may also be included in the controller 170.

When the controller 170 determines that the specific action is detected, the controller 170 may duplicate a received touch input and transmit the duplicated touch input to the HID descriptor.

The HID descriptor may determine whether the touch input is an input of a first type (S405).

The HID descriptor may determine whether the touch input is an input of a first type or an input of a second type.

The input of the first type may be an input for menu control on an operating system installed in the sink device 23. The operating system installed in the sink device 23 may be WebOS.

The input of the second type may be any input other than the input of the first type. That is, the input of the second type may be an input for control other than menu control on the operating system installed in the sink device 23.

When the controller 170 determines that the touch input is an input of the first type, the controller 170 may switch the processing entity of the touch input back from the source device 21 to the sink device 23 (S407).

When the HID descriptor determines that the touch input is an input of the first type, the HID descriptor may transmit information indicating that the touch input is of the first type to the controller 170.

The controller 170 may not transmit a touch input received thereafter to the source device 21. That is, the controller 170 may process the received touch input by itself.

When the HID descriptor determines that the touch input is an input of the second type (S409), the HID descriptor may maintain the processing entity of the touch input as the source device 21 (S411).

When the controller 170 determines that the touch input is an input of the second type, the controller 170 may maintain the processing entity of the touch input as the source device 21. When the controller 170 determines that the touch input is an input of the second type, the controller 170 may transmit touch data corresponding to the touch input or a touch command to the source device 21.

The source device 21 may perform an operation corresponding to the touch data based on the received touch data.

Meanwhile, when the specific action is detected again after step S407 or step S411, the controller 170 may stop duplicating a touch input received thereafter to the HID descriptor. At the same time, the controller 170 may fix the processing entity of the touch input as the sink device 23.

That is, the specific action may be an action serving as a criterion for switching the processing entity of the touch input to the source device 21 or the sink device 23 or fixing the processing entity as the sink device 23.

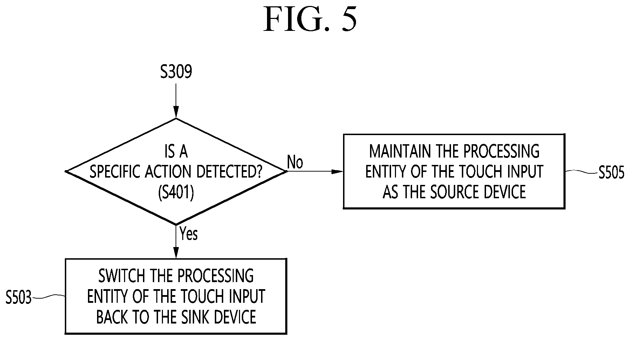

FIG. 5 is a flowchart for describing a process of determining a processing entity of a touch input according to detection of a specific action when a source device is determined as the processing entity of the touch input according to another embodiment of the present disclosure.

FIG. 5 may illustrate an operation performed after step S309 of FIG. 3.

Referring to FIG. 5, in a state in which the processing entity of the touch input is determined as the source device 21, the controller 170 of the sink device 23 may determine whether a specific action is detected (S501).

The specific action may be a user action of selecting a toggle button displayed on the display 180 of the sink device 23. As an example, the controller 170 may receive a control signal for the toggle button from a remote control apparatus (not shown).

As another example, the specific action may be a user's voice command indicating an intention to switch the processing entity of the touch input.

As another example, when the sink device 23 includes a camera, the specific action may be a specific gesture extracted from a user image captured through the camera.

When the controller 170 determines that the specific action is detected, the controller 170 may switch the processing entity of the touch input back from the source device 21 to the sink device 23 (S503).

The controller 170 may recognize the specific action as a trigger for switching the processing entity of the touch input.

When the controller 170 determines that the specific action is not detected, the controller 170 may maintain the processing entity of the touch input as the source device 21 (S505).

As described above, according to the embodiment of FIG. 5, the sink device 23 can easily change the processing entity of the touch input by detecting the specific action.

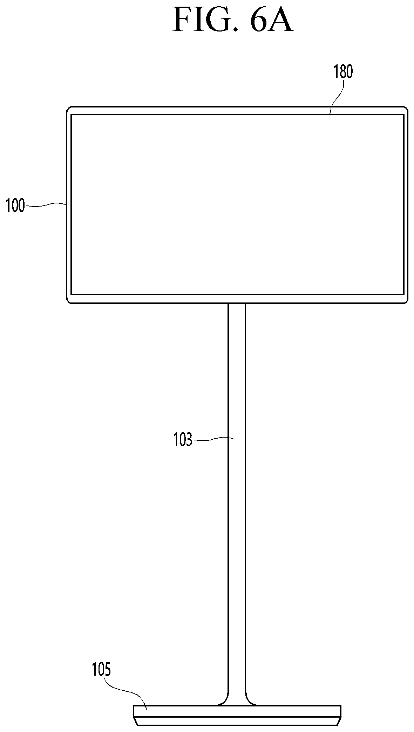

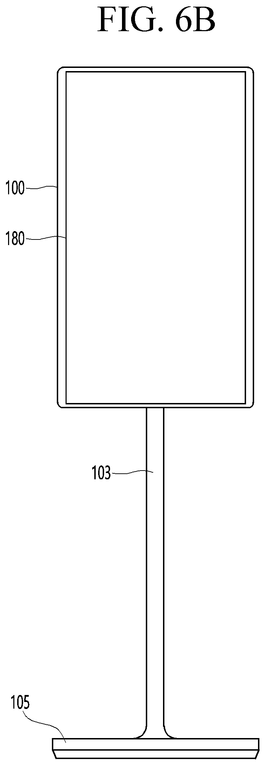

FIG. 6A and FIG. 6B are views for describing a landscape mode and a portrait mode of a stand-type display apparatus according to an embodiment of the present disclosure.

Referring to FIG. 6A and FIG. 6B, a stand-type display apparatus 100 is illustrated.

A shaft 103 and a stand base 105 may be connected to the display apparatus 100.

The shaft 103 may connect the display apparatus 100 and the stand base 105. The shaft 103 may extend vertically.

A lower end of the shaft 103 may be connected to an edge portion of the stand base 105.

The lower end of the shaft 103 may be rotatably connected to a peripheral portion of the stand base 105.

The display apparatus 100 and the shaft 103 may rotate about a vertical axis with respect to the stand base 105.

An upper portion of the shaft 103 may be connected to a rear surface of the display apparatus 100.

The stand base 105 may serve to support the display apparatus 100.

The display apparatus 100 may be configured to include the shaft 103 and the stand base 105.

The display apparatus 100 may rotate about a point at which the upper portion of the shaft 103 contacts the rear surface of the display 180.

FIG. 6A illustrates operation in a landscape mode in which a horizontal length of the display 180 is greater than a vertical length thereof, and FIG. 6B may illustrate operation in a portrait mode in which the vertical length of the display 180 is greater than the horizontal length thereof.

A user may carry and move the stand-type display apparatus. That is, unlike a fixed device, the stand-type display apparatus has improved mobility, and thus the user is not restricted by an installation location.

According to an embodiment of the present disclosure, the above-described method may be implemented as processor-readable code in a medium in which a program is recorded. Examples of the processor-readable medium include ROM, RAM, CD-ROM, magnetic tape, floppy disk, and optical data storage devices.

The display apparatus described above is not limitedly applied to the configurations and methods of the above-described embodiments, and the embodiments may be configured such that all or part of the respective embodiments are selectively combined so that various modifications can be made.

## Claims

1. A sink device, comprising:
a display configured to receive a touch input;
an external device interface configured to receive a video signal from a source device through a Universal Serial Bus (USB) standard; and
a controller configured to detect connection to the source device through the USB standard, and switch a processing entity of the touch input received through the display from the sink device to the source device when the display outputs the video signal.

2. The sink device of claim 1,
wherein the controller is configured to switch the processing entity of the touch input back from the source device to the sink device when the connection to the source device through the USB standard is released.

3. The sink device of claim 1,
wherein the controller is configured to switch the processing entity of the touch input back from the source device to the sink device when power of the source device is turned off.

4. The sink device of claim 1,
wherein the controller is configured to switch the processing entity of the touch input back from the source device to the sink device when an external input is switched from a USB input to another input.

5. The sink device of claim 1,
wherein the controller is configured to switch the processing entity back from the source device to the sink device when a specific action is detected.

6. The sink device of claim 1,
wherein the controller is configured to:
switch the processing entity back from the source device to the sink device when a specific action is detected and the touch input is of a first type; and
maintain the processing entity as the source device when the specific action is detected and the touch input is of a second type.

7. The sink device of claim 6,
wherein the first type is a type for menu control of an operating system installed in the sink device, and
wherein the second type is all types other than the first type.

8. The sink device of claim 1,
wherein the USB standard is USB-C DP Alt (USB-C DisplayPort Alternate).

9. A method of operating a sink device including a display configured to receive a touch input and an external device interface configured to receive a video signal from a source device through a Universal Serial Bus (USB) standard, the method comprising:
detecting connection to the source device through the USB standard;
receiving the video signal; and
switching a processing entity of the touch input received through the display from the sink device to the source device when the display outputs the video signal.

10. The method of claim 9,
further comprising:
switching the processing entity of the touch input back from the source device to the sink device when the connection to the source device through the USB standard is released.

11. The method of claim 9,
further comprising:
switching the processing entity of the touch input back from the source device to the sink device when power of the source device is turned off.

12. The method of claim 9,
further comprising:
switching the processing entity of the touch input back from the source device to the sink device when an external input is switched from a USB input to another input.

13. The method of claim 9,
further comprising:
switching the processing entity back from the source device to the sink device when a specific action is detected.

14. The method of claim 9,
further comprising:
switching the processing entity back from the source device to the sink device when a specific action is detected and the touch input is of a first type; and
maintaining the processing entity as the source device when the specific action is detected and the touch input is of a second type.

15. The method of claim 14,
wherein the first type is a type for menu control of an operating system installed in the sink device, and
wherein the second type is all types other than the first type.
